# EUROPÄISCHE PATENTSCHRIFT

(11) **EP 1 841 612 B1**
(45) Veröffentlichungstag und Bekanntmachung des Hinweises auf die Patenterteilung: **05.10.2011**
(21) Anmeldenummer: 06706183.8
(22) Anmeldetag: 10.01.2006
(51) Int. Cl.: B60K 11/04, F28F 9/00

(54) **MODULHALTER FÜR WÄRMEÜBERTRAGER SOWIE WÄRMEÜBERTRAGER**
MODULE MOUNT FOR HEAT EXCHANGERS, AND A CORRESPONDING HEAT EXCHANGER
SUPPORT MODULAIRE POUR ECHANGEUR DE CHALEUR ET ECHANGEUR DE CHALEUR CORRESPONDANT

(30) Priorität: 14.01.2005 DE 102005002058
(43) Veröffentlichungstag der Anmeldung: 10.10.2007
(73) Patentinhaber: Behr GmbH & Co. KG, 70469 Stuttgart (DE)
(72) Erfinder: HEINE, Reinhard, 71397 Leutenbach (DE)
(74) Vertreter: Grauel, Andreas
(86) Internationale Anmeldenummer: PCT/EP2006/000137
(87) Internationale Veröffentlichungsnummer: WO 2006/074894

(56) Entgegenhaltungen:
- EP-A- 0 211 253
- FR-A- 2 822 760
- US-A- 4 651 839
- US-A- 6 158 500
- US-A1- 2003 146 030

## Beschreibung

Die Erfindung betrifft ein Befestigungselement für einen Wärmeübertrager, insbesondere für ein Kühlmodul zur elastischen Abstützung an einem Kraftfahrzeugrahmen, sowie ein Wärmeübertragerrahmen mit einem Halteelement, insbesondere für einen Kühlmodulrahmen zur elastischen Abstützung eines Kühlmoduls an einem Kraftfahrzeugrahmen. Des Weiteren betrifft die Erfindung einen Wärmeübertrager, insbesondere ein Kühlmodul für ein Kraftfahrzeug. Weiterhin betrifft die Erfindung ein Verfahren zur Installation bzw. Montage eines Wärmeübertragers, insbesondere eines Kühlmoduls in einem Kraftfahrzeug, sowie ein Verfahren zur Herstellung eines Befestigungselements für einen Wärmeübertrager, insbesondere für ein Kühlmodul zur elastischen Abstützung an einem Kraftfahrzeugrahmen.

Kühlmodule sind, wie aus dem Stand der Technik bekannt ist, beispielsweise aus der DE 100 18 0001 A1 und der DE 197 31 999 A1, Aggregate von mehreren Wärmeübertragern wie Kühlmittelkühler, Ladeluftkühler, Kondensator oder Ölkühler, die zu einer Baueinheit bzw. Modul zusammengefasst und über eine gemeinsame, in der Regel elastischen, Befestigung bzw. Lagerung gegenüber einem Fahrzeug bzw. einem Rahmen oder Rahmenteil des Fahrzeugs abgestützt werden.

Bei Kraftfahrzeugen, insbesondere bei Nutzfahrzeugen, treten aufgrund der relativ großen Massen der Wärmeübertrager und von Schwingungen des Kraftfahrzeuges erhebliche Kräfte auf, die von der elastischen Befestigung bzw. Lagerung des Wärmeübertragers aufgenommen werden müssen. Daneben treten auf Grund von thermischen Effekten, wie hohen Temperaturen im Bereich des Kraftfahrzeugsmotors bzw. des Motorraums und großen Temperaturunterschieden bzw. -schwankungen, Verformungen von Bauteilen des Wärmeübertragers und Bauteilen im Motorraum und/oder Spannungen in den Bauteilen auf, die ebenfalls von der Befestigung bzw. Lagerung des Kühlmoduls aufgenommen werden müssen.

Im Stand der Technik, beispielsweise aus der DE 100 18 000 A1, ist eine solche elastische Befestigung bzw. Lagerung für Kühlmodule mit einem winkelförmig ausgebildeten Befestigungselement bekannt.

Die DE 102 20 544 A1 schlägt ein weitere, einfach ausgebildete Befestigung bzw. Lagerung für ein Kühlmodul eines Verbrennungsmotors eines Kraftfahrzeuges zur elastischen Abstützung gegenüber einem Rahmen des Kraftfahrzeuges mit einem als extrudiertes Aluminium-Profil ausgebildeten Befestigungselement vor.

Weiterhin ist aus dem Stand der Technik eine Kühlmodullagerung für ein Kraftfahrzeug mit einem komplexen, mehrteiligen Befestigungselement, einem mehrteiligen Modulhalter, welcher das Kühlmodul fahrzeugseitig abstützt, sowie mit einem Rahmenzapfen, welcher seitens des Kühlmoduls die Verbindung zu dem mehrteiligen Modulhalter bewirkt, bekannt.

Der zylinderförmig ausgebildete, im Querschnitt runde Rahmenzapfen ist einstückig mit einem Rahmenteil des Kühlmodulrahmens, in diesem Fall einem Seitenteil des Rahmens des Kühlmoduls, verbunden.

Der Modulhalter besteht aus einem Abstützelement, einem Kunststoffhalter, welcher mittels zweier Schraubverbindungen an einem Kraftfahrzeugrahmen befestigt ist. In dem Kunststoffhalter sind mehrere Dämpfungselemente, in diesem Fall ein zentrales Gummielement sowie mehrere um das zentrale Gummielement angeordnete Anschlagselemente, angeordnet.

Das zentrale Gummielement weist ähnlich einer Gummimanschette eine zylindrische Bohrung auf, in welcher ein Kunststoffring eingepresst ist. In diesen Kunststoffring ist bei montiertem Kühlmodul der runde Rahmenzapfen kraftschlüssig eingesteckt.

EP211253 offenbart ein Befestigungselement für einen Wärmeübertrager, insbesondere für ein Kühlmodul zur elastischen Abstützung an einem Kraftfahrzeugrahmen, mit einem Abstützelement, an welchem mindestens eine Verbindungseinrichtung, für eine Verbindung mit einem Kraftfahrzeugrahmen, vorgesehen ist, und mit einem Dämpfungselement, welches mit dem Abstützelement verbunden ist, wobei das Dämpfungselement für eine formschlüssige Verbindung mit einem an einem Wärmeübertrager angeordneten Halteelement eingerichtet ist, wobei das Dämpfungselement einen Durchbruch für die formschlüssige Verbindung aufweist, welcher von mehreren Seitenwänden eingefasst bzw. umgeben ist.

Nachteilig an dieser Kühlmodullagerung ist einerseits eine hohe Teilevielfalt, beispielsweise durch die mehreren Dämpfungselemente, welche einen Herstellungsaufwand in Bezug auf Materialeinsatz und damit Herstellungskosten erhöht. Andererseits erweist sich der für die kraftschlüssige Verbindung zwischen dem Kunststoffring und dem runden Rahmenzapfen notwendige enge Toleranzbereich zwischen Kunststoffring und Rahmenzapfen als kostentreibend und damit auch als nachteilig.

Der Erfindung liegt somit die Aufgabe zugrunde, eine Lagerung für einen Wärmeübertrager, insbesondere für ein Kühlmodul zur elastischen Abstützung an einem Kraftfahrzeugrahmen, zu schaffen, welche einfacher und kostengünstiger hergestellt werden kann.

Diese Aufgabe wird erreicht durch ein Befestigungselement gemäß Anspruch 1, einen Wärmeübertragerrahmen mit einem Halteelement nach Anspruch 14 und einen Wärmeübertrager nach Anspruch 22 erreicht.

Vorteilhafte Ausführungsformen und Weiterbildungen sind Gegenstand der Unteransprüche.

Die Gegenstände der Unteransprüche beziehen sich sowohl auf das erfindungsgemäße Befestigungselement für einen Wärmeübertrager, das erfindungsgemäße Halteelement für einen Wärmeübertragerrahmen, auf den erfindungsgemäßen Wärmeübertrager, sowie auf das erfindungsgemäße Verfahren zur Installation eines Wärmeübertragers und das erfindungsgemäße Verfahren zur Herstellung eines Befestigungselements für einen Wärmeübertrager, insbesondere für ein Kühlmodul zur elastischen Abstützung an einem Kraftfahrzeugrahmen.

Die Erfindung und weitere Vorteile werden nachfolgend in mehreren Ausführungsbeispielen erläutert, wobei eine Beschränkung der Erfindung hierdurch nicht erfolgen soll.

Es zeigen:
- Fig. 1a, b: zwei Ansichten einer beispielhaften erfindungsgemäßen Kühlmo- dullagerung eines Kraftfahrzeugkühlmoduls in aufgestecktem, teil- montiertem Zustand;
- Fig. 2: eine andere Ansicht der beispielhaften erfindungsgemäßen Kühl- modullagerung nach Fig. 1a, b in getrenntem, unmontiertem Zu- stand;
- Fig. 3a, b: zwei Ansichten eines beispielhaften erfindungemäßen Kunststoff- halters der beispielhaften erfindungsgemäßen Kühlmodullagerung gemäß Fig.1a, b;
- Fig. 4a, b: zwei weitere Ansichten der beispielhaften erfindungsgemäßen Kühlmodullagerung nach Fig.1a, b in getrenntem, unmontiertem Zustand, in welchen eine Gesamt-Montage des Kühlmoduls ver- deutlicht wird;
- Fig. 5a, b: zwei Darstellungen von alternaiven Zapfenprofilgestaltungen mit dachförmigen (Fig.5a) und rechteckigen (Fig.5b) Zapfenwänden.

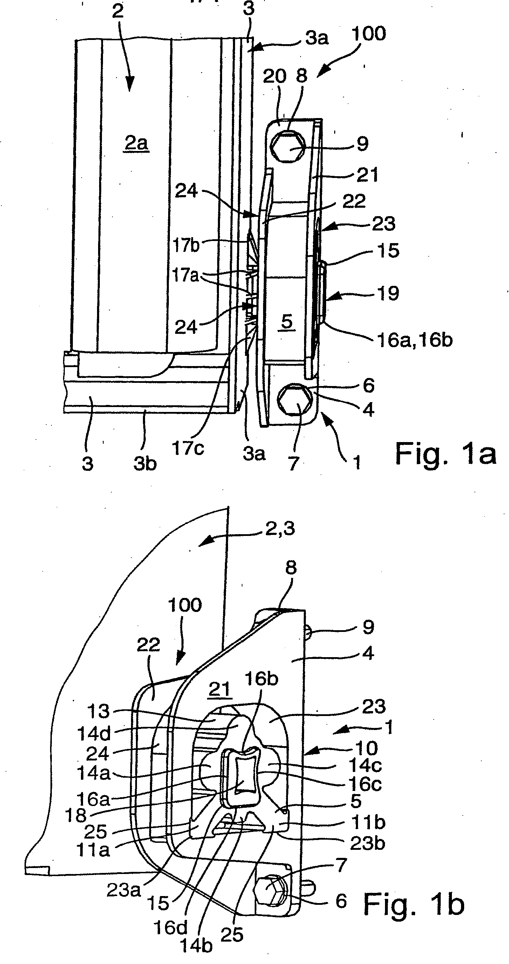

Die Fig. 1, 2 und 4 zeigen jeweils nur schematisch angedeutet einen unteren, seitlichen Eckbereich eines Kühlmoduls 2 für einen Verbrennungsmotor eines Kraftfahrzeuges.

Bei einem solchen Kühlmodul 2 ist, wie bekannt ist, ein Ladeluftkühler meist mit weiteren Wärmeübertragern wie Kohlmitteluftkühler, Kältemittelkondensator und Ölkühler sowie Kühlmittelausgleichsbehältern zu einer Baugruppe zusammengefasst. Diese Baugruppe bzw. das Kühlmodul wird dann durch eine gemeinsame Lagerung, meist bestehend aus mehreren, am Kühlmodul 2 verteilt angeordneten, Lagervorrichtungen, kurz Lager, gegenüber dem Rahmen des Fahrzeuges abgestützt.

Meist werden hier auf Grund ihrer Funktion und Anordnung bzw. Position seitliche Hauptlager, insbesondere ein rechtes bzw. linkes Hauptlager, welche die Hauptlast bzw. Gewicht bei der Abstützung des Kühlmoduls 2 gegenüber dem Fahrzeugrahmen tragen und demzufolge meist komplexer ausgebildet sind, und obere Nebenlager, welche beispielsweise nur Kippkräfte aufnehmen sollen, unterschieden.

Zur modulseitigen Verbindung der Lager weist das Kühlmodul 2 mehrere einen Träger-/Modulrahmen 3 bzw. Montageträger 3 ausbildende Seitenteile bzw. Rahmenteile - dargestellt sind in den Fig.1, 2 und 4 das rechte Seitenteil 3a sowie das untere Seitenteil 3b - auf.

Der Modulrahmen 3 besteht normalerweise aus mit Glasfasern verstärktem Kunststoff - PA (Polyamid).

An dem Modulrahmen 3 bzw. an diesen Seitenteilen sind dann die entsprechend ihrer Position und Funktion benannten unteren bzw. oberen, linken bzw. rechten Haupt- bzw. Neben-Lager angeordnet.

In den Fig. 1 bis 4 ist jeweils das rechte, untere Hauptlager 100, im Folgenden kurz Modullager 100, welches demzufolge am rechten, unteren Seitenteil 3a des Modulrahmens 3 angeordnet ist, dargestellt. In entsprechender Weise ist, ohne dass es dargestellt ist, ein symmetrisch dazu aufgebautes linkes, unteres Hauptlager am linken, unteren Seitenteil angeordnet.

Als wesentliche Bestandteile umfasst das Modullager 100, wie den Fig.1 bis 4 eindeutig zu entnehmen ist, einen modulseitig angeordneten, profilierten (Hohl-)Zapfen 15, kurz Zapfen 15, sowie einen mittels eines Gummielements 5 unmittelbar und formschlüssig mit dem Zapfen 15 verbundenen Modulhalter 1, welcher neben dem Gummielement 5 als weitere, mit dem Gummielement 5 formschlüssig verbundene, Komponente einen Kunststoffhalter 4 umfasst.

Der Modulhalter 1, umfassend den Kunststoffhalter 4 (erste Komponente) und das Gummielement 5 (zweite Komponente), ist dabei als "Zwei-Komponenten-Teil" durch Spritzgießen hergestellt, wobei nach Spritzen der ersten Komponente, des Kunststoffhalters 4, die zweite Komponente, das Gummielement 5, an die erste Komponente angespritzt wird.

Wie weiterhin insbesondere den Fig. 1, 2 und 4 zu entnehmen ist, ist der Zapfen 15 am Modulrahmen 3, d.h. am seitlichen Rahmenteil 3a, einstückig angeformt, d.h. angespritzt.

Weiter zeigen die Fig.1, 2 und 4 am Zapfen 15 selbst 16 sowie in einem Nahbereich 17 des Zapfens 15 am Seitenteil 3a ausgebildete, auch gespritzte, horizontale und vertikale Rippen und Stege 16, 17.

Diese Rippen und Stege 16, 17, d.h. im Allgemeinen so genannte Positionierungselemente 16, 17, bewirken - insbesondere diese auf dem Zapfen 15 - eine, insbesondere horizontale, Positionierung des unmittelbar und formschlüssig auf den Zapfen 15 aufgesteckten Gummielements 5 des Modulhalters 1.

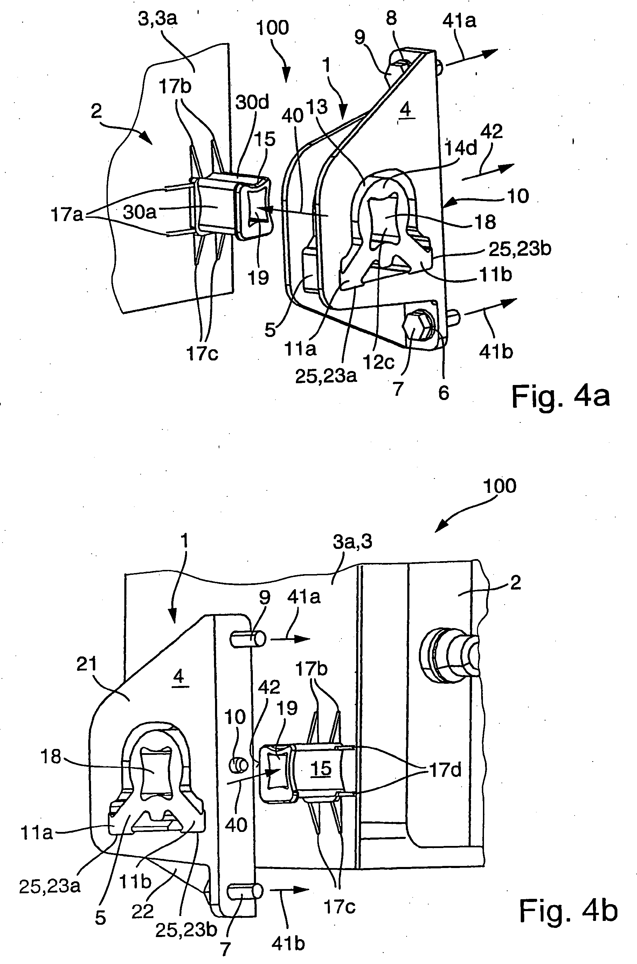

Wie beispielsweise den Fig. 4a und b entnommen werden kann, weist der in Richtung des Fahrzeugrahmens offene 19 (Hohl-)Zapfen 15 im Wesentlichen nach innen gebogene Seitenwände 30a bis d auf.

Diese nach innen gebogenen (bogenförmige Zapfenprofilierung/-gestaltung) bzw. nicht geraden Seitenwände 30a bis d sind insbesondere für Druckbelastungen geeignet und wirken einem Wegkriechen und/oder Ausknicken des auf dem Zapfen 15 direkt und formschlüssig aufgesteckten Gummielements 5 entgegen.

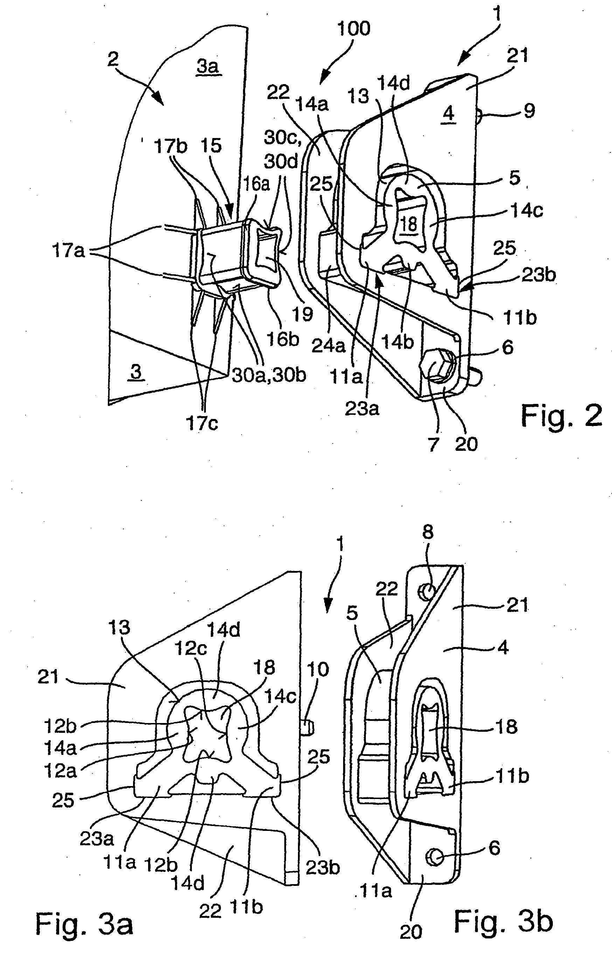

Wie weiter den Fig. 1 bis 4, insbesondere den Fig.3a und b, zu entnehmen ist, ist das Gummielement 5 als einstückiges, zusammenhängendes (Gummi-)Teil ausgebildet. Dieses weist, in etwa zentral, eine entsprechend dem Zapfenprofil ausgebildete Öffnung 18 auf. D.h., die die Öffnung 18 umschließenden Seiten- bzw. Innenwände 12a bis d des Gummielements 5 sind entsprechend den Seitenwänden 30a bis d des Zapfens 15 angepasst und damit ebenfalls nach innen gebogen.

Wie die Fig.1 bis 4 weiter zeigen, weisen die Seitenwände 12 a bis d des Gummielements 5 in ihren mittleren Bereichen Verdickungen 14a bis d zur optimalen Druckbelastung und Verhinderung des Wegkriechens und/oder Ausknickens auf.

Somit kann durch Aufstecken des Gummielements 5 auf den Zapfen 15 die - in diesem Fall unmittelbare und formschlüssige - modulseitige Lagerverbindung bewirkt werden. Sonst übliche, insbesondere auch als Verstärkung wirkende, Zwischenelemente, wie Kunststoffringe, insbesondere bei kraftschlüssigen Verbindungen können hier entfalten.

Das einstückige bzw. zusammenhängende Gummielement 5 weist, wie ebenfalls den Fig. 1 bis 4 zu entnehmen ist, einen linken 11a und rechten 11 b Fortsatz, ähnlich einer Abstützung bzw. einem Fuß auf, durch welche Fortsätze 11a, b das Gummielement 5 gegenüber dem Kunststoffhalter 4 abgestützt und mit dem Kunststoffhalter 4 - als alleinige Verbindung bzw. Kontaktierung - formschlüssig verbunden ist.

Die Fig. 1 bis 4 zeigen hierzu weiter, dass der Kunststoffhalter 4 in Form eines U-Profils mit einem schmalen Boden bzw. Steg 20 sowie einer linken Seitenwand 22 und rechten 21 Seitenwand bzw. einer linken 22 Flanke und rechten 21 Flanke gestaltet ist, zwischen welchen Seitenwänden 21, 22 das Gummielement 4, ähnlich einer Sandwich-Bauweise, angeordnet ist.

In den beiden Seitenwänden 21, 22 bzw. Flanken 21, 22 sind deckungsgleiche Öffnungen 23, 24 vorhanden, in deren unteren Eckbereichen 23a, b bzw. 24a, b Aussparungen 25 für die Fortsätze 11a, b bzw. die formschlüssige Verbindung zwischen dem Gummielement 5 und dem Kunststoffhalter 4 bzw. für das Anspritzen des Gummielements 5 im Kunststoffteil im Rahmen des "Zwei-Komponenten"-Verfahrens eingearbeitet sind.

Hierdurch wird die Dämpfungswirkung der Lagerung verbessert und Material eingespart.

Alternativ kann hier auch vorgesehen sein, dass das Gummielement 5 im Kunststoffhalter 4 nicht als "Zwei-Komponenten"-Teil hergestellt wird, sondern mit seinen Fortsätzen 11a, b formschlüssig in die Aussparungen 25 eingeknöpft wird.

Wie die Fig. 1 bis 4 weiterhin zeigen, sind zur fahrzeugseitigen Verbindung des Modullagers 100 bzw. des Modulhalters 1 mehrere Verbindungseinrichtungen am Steg 20 des Kunststoffhalters 4 vorgesehen.

Der Steg 20 weist dazu zwei Bohrungen 6, 8 für Befestigungsschrauben 7, 9 auf. Weiterhin ist an dem Steg 20, in etwa mittig zwischen den zwei Schraubverbindungen 6,7 bzw. 7, 8, ein Fixierungszapfen 10 angeordnet, durch welchen der Modulhalter 1 an dem Kraftfahrzeugrahmen (nicht dargestellt) formschlüssig fixiert wird.

Dieses ist zweckmäßig, da bei einer Vorspannung von Kunststoff bei der Verschraubung bzw. durch die Verschraubung des Kunststoffhalters 4 der Kunststoff relaxiert bzw. (in diesem Fall horizontal) wegkriecht, wodurch ein Lagerspiel entstehen kann. Dieser Beweglichkeit wirkt die formschlüssige Fixierung mittels des Zapfens entgegen.

Alternativ kann die fahrzeugseitige Verbindung anstelle der Schraubverbindungen 6, 7 bzw. 8, 9 durch entsprechend angeordnete Clips-Verbindungen realisiert sein.

In den Fig.4a und b ist weiterhin die Gesamt-Montage des Kühlmoduls 2 ins Fahrzeug (nicht dargestellt) verdeutlicht.

Mit dem Pfeil 40 ist das Aufstecken des Gummielements 5 auf den Zapfen 15 - wodurch die unmittelbare und formschlüssige Verbindung zwischen den Teilen hergestellt wird - und die Positionierung des Gummielements 5 an den Anschlagrippen 16, 17 gekennzeichnet.

Mit den Pfeilen 41a, b ist das Verschrauben des Modulhalters 1 bzw. des Kunststoffhalters 4 am Fahrzeug (nicht sichtbar) bzw. am Fahrzeugrahmen (nicht sichtbar) verdeutlicht.

Mit Pfeil 42 ist die Herstellung der formschlüssigen Fixierung des Modulhalters 1 bzw. des Kunststoffhalters 2 durch den Fixierungszapfen 10 am Fahrzeug bzw. an dem Fahrzeugrahmen (nicht sichtbar) gekennzeichnet.

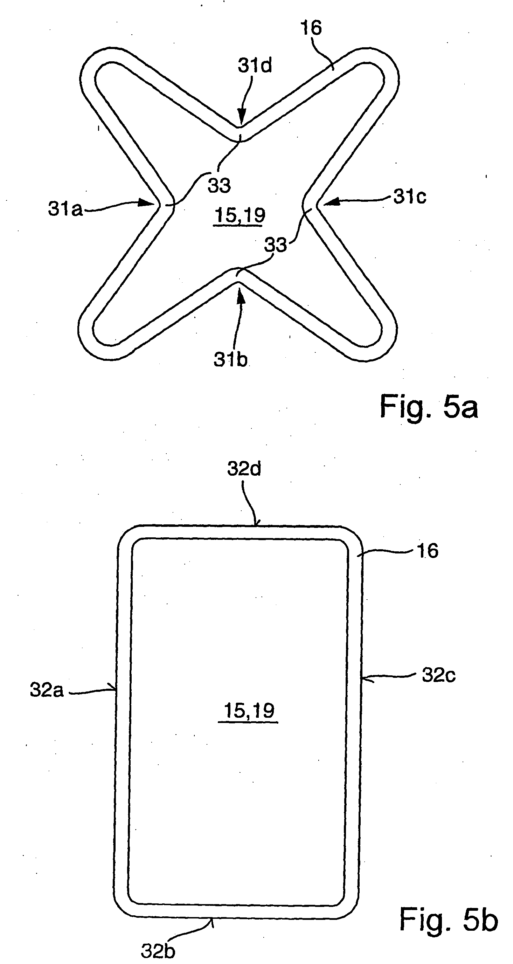

Fig.5 a und b zeigen alternative Profilgestaltungen des profilierten (Hohl-) Zapfens 15.

Wie Fig.5a zeigt, weist in diesem Fall der Zapfen 15 dachförmige Seitenwände 31a bis d mit nach innen gerichteten Dachkanten (First) 33 auf. Die nach innen gerichteten Dachkanten 33 sorgen auch hier für eine optimale Druckgestaltung und verhindern das Wegkriechen und Ausknicken des Gummielements 5.

Fig.5b zeigt eine rechteckige Zapfenprofilgestaltung, bei der der Zapfen 15 gerade, im Querschnitt ein Rechteck ausbildende Seitenwände 32a bis d aufweist.

Auch an diesen Zapfen können Positionierungselement 16, wie Rippen und/oder Stege, vorgesehen sein.

## Patentansprüche

1. Befestigungselement für einen Wärmeübertrager, insbesondere für ein Kühlmodul (2) zur elastischen Abstützung an einem Kraftfahrzeugrahmen, mit einem Abstützelement (1), an welchern mindestens eine Verbindungseinrichtung (4) für eine Verbindung mit einem Kraftfahrzeugrahmen vorgesehen ist, und mit einem Dämpfungselement (5), welches mit dem Abstützelement (1) verbunden ist, wobei das Dämpfungselement (5) für eine formschlüssige Verbindung mit einem an einem Wärmeübertrager angeordneten Halteelement (15) eingerichtet ist, wobei das Dämpfungselement (5) einen Durchbruch (18) für die formschlüssige Verbindung, aufweist und der Durchbruch (18) von mehreren Seitenwänden (12a,12b,12c,12d) eingefasst bzw. umgeben ist, von denen zumindest eine oder mehrere, im wesentlichen nach innen gewölbt ist bzw. sind und/oder in einem mittleren Seitenwandbereich verdickt ist bzw. sind, wobei das Dämpfungselement ein im Wesentlichen rundes Außenprofil und zwei Fortsätze (11a,11b), insbesondere ähnlich von zwei Füßen, aufweist, unter Verwendung derer das Dämpfungselement (5) formschlüssig mit dem Abstützelement (1) verbunden ist.

2. Befestigungselement nach mindestens einem der voranstehenden Ansprüche, **dadurch gekennzeichnet, dass** an dem Abstützelement (1) mehrere Verbindungseinrichtungen (4) vorgesehen sind.

3. Befestigungselement nach mindestens einem der voranstehenden Ansprüche **dadurch gekennzeichnet, dass** mindestens die eine oder die mehreren Verbindungseinrichtungen (4) eine Bohrung (6) für eine Befestigungsschraube bzw. Bohrungen (6) für Befestigungsschrauben ist bzw. sind.

4. Befestigungselement nach mindestens einem der voranstehenden Ansprüche, **dadurch gekennzeichnet, dass** mindestens die eine oder die mehreren Verbindungseinrichtungen (4) ein Fixierungszapfen ist bzw. Fixierungszapfen sind, durch welchen das Abstützelement (1), insbesondere an dem Kraftfahrzeugrahmen, formschlüssig fixiert wird.

5. Befestigungselement nach mindestens einem der voranstehenden Ansprüche, **dadurch gekennzeichnet, dass** das Abstützelement (1) ein Kunststoffspritzteil ist und im Wesentlichen in Form eines U-Profils mit einem Steg und einer linken Seitenwand und rechten Seitenwand ausgebildet ist.

6. Befestigungselement nach mindestens einem der voranstehenden Ansprüche, **dadurch gekennzeichnet, dass** die Verbindung zwischen dem Abstützelement (1) und dem Dämpfungselement (5) eine formschlüssige Verbindung ist.

7. Befestigungselement nach mindestens einem der voranstehenden Ansprüche, **dadurch gekennzeichnet, dass** das Dämpfungselement (5) im Wesentlichen zwischen den Flanken des Abstützelements und/oder die mindestens eine Verbindungseinrichtungen auf dem Steg angeordnet ist.

8. Befestigungselement nach mindestens einem der voranstehenden Ansprüche, **dadurch gekennzeichnet, dass** das Abstützelement (1) oder deren Seitenwände, mindestens eine Öffnung oder zwei deckungsgleiche Öffnungen in den Seitenwänden, aufweist, in welcher bzw. in welchen zumindest ein Teilbereich bzw. Teilbereiche des Dämpfungselements (5) angeordnet ist bzw. sind.

9. Befestigungselement nach mindestens einem der voranstehenden Ansprüche, **dadurch gekennzeichnet, dass** das Dämpfungselement (5) das Abstützelement in einem oder mehreren Aussparungen angeordnet in Eckbereichen der einen Öffnung bzw. der Öffnungen des Abstützelements formschlüssig kontaktiert.

10. Befestigungselement nach mindestens einem der voranstehenden Ansprüche **dadurch gekennzeichnet, dass** das Dämpfungselement (5) ein einstückiges durch Spritzen hergestelltes Gummiteil ist.

11. Befestigungselement nach mindestens einem der voranstehenden Ansprüche, **dadurch gekennzeichnet, dass** das Befestigungselement ein Zwei-Komponenten-Teil ist.

12. Befestigungselement nach mindestens einem der voranstehenden Ansprüche, **dadurch gekennzeichnet, dass** in dem Abstützelement Aussparungen und an dem Dämpfungselement (5) Fortsätze angeordnet sind, wobei bei die Fortsätze in den Aussparungen angeordnet oder formschlüssig eingeknöpft, sind.

13. Befestigungselement nach mindestens einem der voranstehenden Ansprüche, **dadurch gekennzeichnet, dass** mit dem Dämpfungselement (5) ein Halteelement (15) als ein Fixierungszapfen, welches einstückig an einem Wärmeübertragerrahmen oder an einem Kühlmodulrahmen angeordnet ist, formschlüssig verbunden ist.

14. Wärmeübertragerrahmen mit einem Halteelement (15) zur elastischen Abstützung eines Kühlmoduls an einem Kraftfahrzeugrahmen, welches Halteelement (15) an dem Wärmeübertragerrahmen angeordnet ist, **dadurch gekennzeichnet, dass** das Halteelement (15) für eine formschlüssige Verbindung mit einem Befestigungselement nach einem der vorangehenden Ansprüche 1 bis 13 eingerichtet ist.

15. Wärmeübertragerrahmen mit einem Halteelement nach Anspruch 14, **dadurch gekennzeichnet, dass** an dem Haltelement (15) zumindest ein Positionierungselement oder mehrere Positionierungselemente als eine Rippe, eine Anschlagrippe und/oder ein Steg, zur horizontalen Positionierung eines mit dem Haltelement formschlüssig verbundenen Befestigungselements angeordnet ist bzw. sind.

16. Wärmeübertragerrahmen mit einem Halteelement nach einem der Ansprüche 14 oder 15, **dadurch gekennzeichnet, dass** das Haltelement (15) als einstückig mit dem Wärmeübertragerrahmen verbundener Zapfen ausgebildet ist.

17. Wärmeübertragerrahmen mit einem Halteelement nach einem der Ansprüche 14 bis 16, **dadurch gekennzeichnet, dass** das Haltelement (!5) oder der Zapfen ein Hohlproflteil ist.

18. Wärmeübertragerrahmen mit einem Halteelement nach Anspruch 17, **dadurch gekennzeichnet, dass** das Hohlprofil im Wesentlichen gebogene oder nach innen gebogene Seitenwände (30a,30b,30c,30d) aufweist.

19. Wärmeübertragerrahmen mit einem Halteelement nach einem der Ansprüche 17 oder 18, **dadurch gekennzeichnet, dass** das Hohlprofil im Wesentlichen dachförmige Seitenwände mit nach innen gerichteten Dachkanten aufweist.

20. Wärmeübertragerrahmen mit einem Halteelement nach einem der Ansprüche 17 bis 19, **dadurch gekennzeichnet, dass** das Hohlprofil im Wesentlichen ein Rechteck-Profil ist.

21. Wärmeübertragerrahmen mit einem Halteelement nach einem der Ansprüche 14 bis 20, **dadurch gekennzeichnet, dass** mit dem Halteelement (15) ein Befestigungselement nach einem der Ansprüche 1 bis 13 durch ein Dämpfungselement formschlüssig verbunden ist.

22. Wärmeübertrager oder Kühlmodul für ein Kraftfahrzeug mit zumindest einem Kühlmütelkühler und/oder Ladeluftkühler eines Kraftfahrzeuges, insbesondere eines Nutzfahrzeuges, mit mindestens einem Rahmenteil des zumindest einen Kühlmittelkühlers und/oder einen Ladeluftkühlers, mit mindestens einer an dem mindestens einen Rahmenteil angeordneten Lagervorrichtung (100) zur elastischen Abstützung des Wärmeübertragers im Kraftfahrzeug, **dadurch gekennzeichnet, dass** die Lagervorrichtung (100) ein an einem Wärmeübertragerrahmen vorgesehenes Halteelement (15) nach einem der Ansprüche 14 bis 21, sowie ein Befestigungselement nach einem der Ansprüche 1 bis 13 aufweist, wobei das Befestigungselement unmittelbar und formschlüssig mit dem Haltelement (15) verbunden ist.

23. Wärmeübertrager nach Anspruch 22, **dadurch gekennzeichnet, dass** ein Dämpfungselement (5) als ein einstückiges Gummielement des Befestigungselements auf dem Haltelement (15) mit dem an dem Rahmenteil verbundenen Zapfen aufgesteckt ist.

24. Wärmeübertrager nach einem der Ansprüch 22 oder 23, **dadurch gekennzeichnet, dass** zumindest ein Positionierungselement an dem Halteelement (15) und/oder an dem Rahmenteil in einem Nahbereich des Haltelements angeordnet ist, unter Verwendung dessen bzw. derer eine Positionierung des Haltelements zu dem Befestigungselement bzw. umgekehrt bewirkbar ist.

## Claims

1. A fastening element for a heat exchanger, in particular for a cooling module (2), for elastic support on a motor vehicle frame, comprising a support element (1), on which at least one connection device (4) for connection to a motor vehicle frame is provided, and comprising a damping element (5) which is connected to the support element (1), wherein the damping element (5) is deigned for a form-fit connection to a retaining element (15) disposed on a heat exchanger, wherein the damping element (5) has an opening (18) for the form-fit connection, and the opening (18) is enclosed or surrounded by a plurality of side walls (12a, 12b, 12c, 12d) at least one or more of which is curved substantially inwardly and/or is thicker in a central side wall region, wherein the damping element comprises a substantially round outer profile and two projections (11a, 11b) which are similiar to two feet in particular, and using which the damping element (5) is connected in a form-fit manner to the support element (1).

2. The fastening element according to at least one of the preceding claims, **characterized in that** a plurality of connection devices (4) are provided on the support element (1).

3. The fastening element according to at least one of the preceding claims, **characterized in that** at least the one or more connection device(s) (4) is a bore (6) for a fastening screw or are bores (6) for fastening screws.

4. The fastening element according to at least one of the preceding claims, **characterized in that** at least the one or more connection devices (4) is a securing pin or are securing pins, via which the support element (1) is affixed in a form-fit manner, on the motor vehicle frame in particular.

5. The fastening element according to at least one of the preceding claims, **characterized in that** the support element (1) is a plastic injection-molded piece, and is in the form of a reverse bend comprising a segment and a left side wall and a right side wall.

6. The fastening element according to at least one of the preceding claims, **characterized in that** the connection between the support element (1) and the damping element (5) is art form-fit connection.

7. The fastening element according to at least one of the preceding claims, **characterized in that** the damping element (5) is disposed on the segment substantially between the flanks of the support element and/or the at least one connection device.

8. The fastening element according to at least one of the preceding claims, **characterized in that** the support element (1) or the side walls thereof comprise at least one opening or two overlapping openings in the side walls, in which at least one subregion or subregions of the damping element (5) is or are disposed.

9. The fastening element according to at least one of the preceding claims, **characterized in that** the damping element (5) contacts the support element in a form-fit manner, disposed in one or more recesses, in corner regions of the one opening or openings of the support element.

10. The fastening element according to at least one of the preceding claims, **characterized in that** the damping element (5) is a single-piece rubber part manufactured by injection.

11. The fastening element according to at least one of the preceding claims, **characterized in that** the fastening element is a two-component part.

12. The fastening element according to at least one of the preceding claims, **characterized in that** recesses are provided in the support element, and projections are provided on the damping element (5), wherein the projections are disposed or snapped into the recesses in a form-fit manner.

13. The fastening element according to at least one of the preceding claims, **characterized in that** a retaining element (15) in the form of a securing pin disposed as a single piece on a heat exchanger frame or a cooling module frame is connected to the damping element (5) in a form-fit manner.

14. A heat exchanger frame comprising a retaining element (15) for the elastic support of a cooling module on a motor vehicle frame, said retaining element (15) being disposed on the heat exchanger frame, **characterized in that** the retaining element (15) is designed for a form-fit connection to a fastening element according to one of the preceding claims 1 to 13.

15. The heat exchanger frame comprising a retaining element according to claim 14, **characterized in that** at least one positioning element or a plurality of positioning elements - in the form of a rib, a stop rib, and/or a segment - is or are disposed on the retaining element (15) for the horizontal positioning of a fastening element connected in a form-fit manner to the retaining element.

16. The heat exchanger frame comprising a retaining element according to one of the claims 14 or 15, **characterized in that** the retaining element (15) is designed as a single piece with the pin connected to the heat exchanger frame.

17. The heat exchanger frame comprising a retaining element according to one of the claims 14 to 15, **characterized in that** the retaining element (15) or the pin is a hollow section part.

18. The heat exchanger frame comprising a retaining element according to claim 17, **characterized in that** the hollow section comprises side walls (30a, 30b, 30c, 30d) which are substantially curved or are curved inwardly.

19. The heat exchanger frame comprising a retaining element according to one of the claims 17 or 18, **characterized in that** the hollow section comprises substantially roof-shaped side walls having inwardly directed roof edges.

20. The heat exchanger frame comprising a retaining element according to one of the claims 17 to 19, **characterized in that** the hollow section is largely a rectangular profile.

21. The heat exchanger frame comprising a retaining element according to one of the claims 14 to 20, **characterised in that** a fastening element according to one of the claims 1 to 13 is connected to the retaining element (15) in a form-fit manner by a damping element.

22. A heat exchanger or cooling module for a motor vehicle comprising at least one coolant radiator and/or charge air cooler of a motor vehicle, in particular a utility vehicle, comprising at least one frame part of the at least one coolant radiator and/or one charge air cooler, comprising at least one bearing device (100) disposed on the at least one frame part for the elastic support of the heat exchanger in the motor vehicle, **characterized in that** the bearing device (100) comprises a retaining element (15) according to one of the claims 14 to 21 provided on a heat exchanger frame, and a fastening element according to one of the claims 1 to 13, wherein the fastening element is connected directly and in a form-fit manner to the retaining element (15).

23. The heat exchanger according to claim 22, **characterized in that** a damping element (5), as a single-piece rubber element of the fastening element, is inserted onto the retaining element (15) with the pin connected to the frame part.

24. The heat exchanger according to one of the claims 22 or 23, **characterized in that** at least one positioning element is disposed on the retaining element (15) and/or on the frame part in a vicinity of the retaining element, using which the retaining element can be positioned with respect to the fastening element, or vice versa.

## Revendications

1. Elément de fixation pour un échangeur de chaleur, en particulier pour un module de refroidissement (2), servant d'appui élastique sur un châssis de véhicule automobile, comprenant un élément d'appui (1) sur lequel il est prévu au moins un dispositif d'assemblage (4) pour un assemblage avec un châssis de véhicule automobile, et comprenant un élément amortisseur (5) qui est assemblé avec l'élément d'appui (1), où l'élément amortisseur (5) est prévu pour un assemblage par complémentarité de forme avec un élément de retenue (15) disposé sur un échangeur de chaleur, où l'élément amortisseur (5) présente une ouverture (18) pour l'assemblage par complémentarité de forme, et l'ouverture (18) est encastrée ou entourée par plusieurs parois latérales (12a, 12b, 12c, 12d) dont au moins une ou plusieurs de ces parois latérales est ou sont bombée(s)- pratiquement vers l'intérieur et / ou est ou sont épaissie (s) dans une zone centrale des parois latérales, ou l'élément amortisseur présente un profil extérieur pratiquement rond et deux prolongements (11a, 11b), en particulier semblables à deux pieds, où en les utilisant, l'élément amortisseur (5) est assemblé par complémentarité de forme avec l'élément d'appui (1).

2. Elément de fixation selon la revendication 1, **caractérisé en ce qu'**il est prévu plusieurs dispositifs d'assemblage (4) sur l'élément d'appui (1).

3. Elément de fixation selon au moins l'une des revendications précédentes, **caractérisé en ce que** le dispositif d'assemblage (4) au moins au nombre de un ou plusieurs de ces dispositifs d'assemblage est un perçage (6) pour une vis de fixation ou sont des perçages (6) pour des vis de fixation.

4. Elément de fixation selon au moins l'une quelconque des revendications précédentes, **caractérisé en ce que** le dispositif d'assemblage (4) au moins au nombre de un ou plusieurs de ces dispositifs d'assemblage est un tenon de fixation ou sont des tenons de fixation par lequel ou par lesquels l'élément d'appui (1) est fixé par complémentarité de forme, en particulier sur le châssis d'un véhicule automobile.

5. Elément de fixation selon au moins l'une quelconque des revendications précédentes, **caractérisé en ce que** l'élément d'appui (1) est une pièce en matière plastique moulée par injection et est configuré pratiquement en ayant la forme d'un profil en U comprenant une partie pleine et une paroi latérale gauche et une paroi latérale droite.

6. Elément de fixation selon au moins l'une quelconque des revendications précédentes, **caractérisé en ce que** l'assemblage entre l'élément d'appui (1) et l'élément amortisseur (5) est un assemblage par complémentarité de forme.

7. Elément de fixation selon au moins l'une quelconque des revendications précédentes, **caractérisé en ce que** l'élément amortisseur (5) est disposé pratiquement entre les flancs de l'élément d'appui et / ou le dispositif d'assemblage au moins au nombre de un est disposé sur la partie pleine.

8. Elément de fixation selon au moins l'une quelconque des revendications précédentes, **caractérisé en ce que** l'élément d'appui (1) ou ses parois latérales, présente dans les parois latérales, au moins une ouverture ou deux ouvertures qui se correspondent, ouverture(s) dans laquelle ou dans lesquelles est ou sont disposée (s) au moins une zone partielle ou des zones partielles de 1. élément amortisseur (5).

9. Elément de fixation selon au moins l'une quelconque des revendications précédentes, **caractérisé en ce que** l'élément amortisseur (5) vient au contact de l'élément d'appui, par complémentarité de forme, dans un ou plusieurs évidements disposé(s) dans des zones angulaires de l'ouverture ou des ouvertures de l'élément d'appui.

10. Elément de fixation selon au moins l'une quelconque des revendications précédentes, **caractérisé en ce que** l'élément amortisseur (5) est une pièce en caoutchouc, d'un seul tenant, fabriquée en étant moulée par injection.

11. Elément de fixation selon au moins l'une quelconque des revendications précédentes, **caractérisé en ce que** l'élément de fixation est une pièce à deux composants.

12. Elément de fixation selon au moins l'une quelconque des revendications précédentes, **caractérisé en ce que** des évidements sont disposés dans l'élément d'appui, des prolongements étant disposés sur l'élément amortisseur (5), où les prolongements sont disposés dans les évidements ou bien encastrés par complémentarité de forme.

13. Elément de fixation selon au moins l'une quelconque des revendications précédentes, **caractérisé en qu'**un élément de retenue (15), conçu comme un tenon de fixation qui est disposé en formant une seule et même pièce sur un cadre d'échangeur de chaleur ou sur un cadre de module de refroidissement, est assemblé par complémentarité de forme avec l'élément amortisseur (5).

14. Cadre d'échangeur de chaleur comprenant un élément de retenue (15) servant à l'appui élastique d'un module de refroidissement sur un châssis de véhicule automobile, lequel élément de retenue (15) est disposé sur un cadre d'échangeur de chaleur, **caractérisé en ce que** l'élément de retenue (15) est disposé pour un assemblage par complémentarité de forme avec un élément de fixation selon l'une quelconque des revendications 1 à 13.

15. Cadre d'échangeur de chaleur comprenant un élément de retenue selon la revendication 14, **caractérisé en ce qu'**au moins un élément de positionnement ou plusieurs éléments de positionnement, comme une nervure, une nervure de butée et / ou une partie pleine, servant au positionnement horizontal d'un élément de fixation assemblé par complémentarité de forme avec l'élément de retenue, est ou sont disposé(s) sur l'élément de retenue (15).

16. Cadre d'échangeur de chaleur comprenant un élément de retenue selon l'une des revendications 14 ou 15, **caractérisé en ce que** l'élément de retenue (15) est configuré comme un tenon assemblé en formant une seule et même pièce avec le cadre de l'échangeur de chaleur.

17. Cadre d'échangeur de chaleur comprenant un élément de retenue selon l'une quelconque des revendications 14 à 16, **caractérisé en ce que** l'élément de retenue (15) ou le tenon est une pièce à profil creux.

18. Cadre d'échangeur de chaleur comprenant un élément de retenue selon la revendication 17, **caractérisé en ce que** le profil creux présente des parois latérales (30a, 30b, 30c, 30d) pratiquement courbées ou bien courbées vers l'intérieur.

19. Cadre d'échangeur de chaleur comprenant un élément de retenue selon l'une des revendications 17 ou 18, **caractérisé en ce que** le profil creux présente des parois latérales pratiquement en forme de toit comprenant des arêtes de toit tournées vers l'intérieur.

20. Cadre d'échangeur de chaleur comprenant un élément de retenue selon l'une quelconque des revendications 17 à 19, **caractérisé en ce que** le profil creux est pratiquement un profil rectangulaire.

21. Cadre d'échangeur de chaleur comprenant un élément de retenue selon l'une quelconque des revendications 14 à 20, **caractérisé en ce qu'**un élément de fixation est assemblé par complémentarité de forme avec l'élément de retenue (15) selon l'une quelconque des revendications 1 à 13, grâce à un élément amortisseur,

22. Echangeur de chaleur ou module de refroidissement pour un véhicule automobile comprenant au moins un radiateur à liquide de refroidissement et / ou un refroidisseur d'air de suralimentation d'un véhicule automobile, en particulier d'un véhicule utilitaire, comprenant au moins une partie de cadre du radiateur à liquide de refroidissement et / ou du refroidisseur d'air de suralimentation, au moins au nombre de un, comprenant au moins un dispositif support (100) disposé sur la partie de cadre au moins au nombre de un et servant à l'appui élastique de l'échangeur de chaleur dans le véhicule automobile,
**caractérisé en ce que** le dispositif support (100) présente un élément de retenue (15) selon l'une quelconque des revendications 14 à 21, prévu sur un cadre d'échangeur de chaleur, ainsi qu'un élément de fixation selon une quelconque des revendications 1 à 13, où l'élément de fixation est assemblé directement et par complémentarité de forme avec l'élément de retenue (15).

23. Echangeur de chaleur selon la revendication 22, **caractérisé en ce qu'**un élément amortisseur (5), conçu comme un élément en caoutchouc - d'un seul tenant - de l'élément de fixation est emboîté sur l'élément de retenue (15) avec le tenon assemblé sur la partie de cadre.

24. Echangeur de chaleur selon l'une des revendications 22 ou 23, **caractérisé en ce qu'**au moins un élément de positionnement est disposé sur l'élément de retenue (15) et / ou sur la partie de cadre située dans une zone rapprochée de l'élément de retenue, élément(s) de positionnement à l'aide duquel ou desquels on peut agir sur un positionnement de l'élément de retenue, par rapport à l'élément de fixation ou inversement.
